# EUROPEAN PATENT SPECIFICATION

(11) **EP 0 627 103 B1**
(45) Date of publication and mention of the grant of the patent: **10.01.1996**
(21) Application number: 93906037.2
(22) Date of filing: 17.02.1993
(51) Int. Cl.: G06T 11/40

(54) **IMAGE TEXTURING SYSTEM HAVING THEME CELLS**
BILDTEXTURIERUNGSSYSTEM MIT THEMAZELLEN.
SYSTEME DE TEXTURATION D'IMAGES POSSEDANT DES CELLULES THEMATIQUES

(30) Priority: 18.02.1992 US 837827
(43) Date of publication of application: 07.12.1994
(73) Proprietor: EVANS & SUTHERLAND COMPUTER CORPORATION, Salt Lake City, UT 84108 (US)
(72) Inventor: COSMAN, Michael, South Jordan, UT 84065 (US); BROWN, Thomas, Salt Lake City, UT 84124 (US)
(74) Representative: Klunker . Schmitt-Nilson . Hirsch
(86) International application number: PCT/US93/01428
(87) International publication number: WO 93/16440

(56) References cited:
- WO-A-85/00913
- WO-A-88/02156
- IEEE NAECON (NEW-YORK, NY,US) vol. 3, 19 June 1986, pages 986 - 991 FOX AND CLARK 'DEVELOPMENT OF COMPUTER-GENERATED IMAGERY FOR A LOW-COST REAL-TIME TERRAIN IMAGING SYSTEM'

## Description

### Field of the Invention

This invention relates generally to a computer graphics system for use with image generators. More specifically, the invention relates to an image texturing system utilizing theme cells for generating patches or areas of terrain image data for a display.

### Background and Summary of the Invention

There are numerous uses for simulated dynamic visual image of terrain representing specific areas of the world. One such use is in flight simulation systems for training pilots.

Typically, flight simulation systems generate images of the terrain along a particular flight path. Accordingly, flight simulation systems enable pilots to become familiar with a flight path, prior to undertaking an actual flight. Typically in flight simulators, computer-generated images of external scenes are viewed from the mock cockpit of an airplane, presented on one or more display devices, such as a CRT (cathode ray tube). The external scenes are generated in real time and produce the illusion of actually looking through a cockpit window at the terrain below, as passed over by a moving airplane. In current simulators, the illusion is sufficiently realistic to permit substitution of training by flight simulator for a significant part of a pilot training curriculum.

In producing moving simulated images of a particular terrain or environment in real time, information or data from terrain maps typically is retrieved from online data bases. International Publication Nos. WO 88/02156 and WO 85/00913 propose data bases formed by at least two-dimensional terrain plan views, whereby each terrain type is identified by a particular terrain texture. However, generating geo-specific images (high resolution images specific for the entire terrain that may possibly be traversed during a flight) is not always possible or practical. For even a small area of terrain, a large amount of map data is required to be stored. Even if large amounts of memory are available, the extent of the simulated terrain remains somewhat limited. Consequently, improved systems are needed to provide simulated terrain displays with lesser storage requirements.

Generally, the quality of traditional simulated terrain images can be improved by utilizing aerial photography and/or satellite imaging data; however, such techniques involve great expense. Moreover, simply blending different aerial photographs or imaging phot, data obtained from satellites is ineffective, creating rather undefined and fragmented images. As with a panoramic scene formed by joined separate photographs, typically, seams dissect the image; for example, fragmenting objects as houses or forests. Such distortions in a simulator display tend to distract the pilot and hinder the training value of the system. To minimize the distortions and improve the quality of the images, considerable photo data and a great deal of time is required to compatibly assemble the data. Clearly, these requirements impose a disadvantage for the rapid real-time generation of images, particularly for images that are required only for limited uses, for example, a one-time use. Usually, in such applications, the sizable expense incurred in collecting the photo data for limited use is neither desirable nor practical. Thus, a need exists for an improved display data system as related to economy, image quality, ease of developing, and storage capacity.

The present invention comprises an improved image texturing system utilizing theme cells to facilitate the generation of terrain image data for a display device. In that regard, the image texturing system of the present development may be combined with traditional terrain systems for use in flight simulation systems.

The improved image texturing system includes a memory means for storing theme maps representing specific terrains, e.g. including anticipated flight routes. The theme maps are disposed on a square grid pattern and have feature identification codes located at each grid point. Sets of four grid points define squares or blocks that are treated as theme cells. Accordingly, a selection means controlled by the image generator selects a current theme map and dissects a desired theme map cell-by-cell to provide representations in sequence of current theme cells. For example, theme maps may be dissected in a raster pattern, treating cells in sequence based on their position and identification codes to specify the terrain at the four corners of the current theme cell. Specifically, a terrain is represented for each of the four corners of each cell, e.g. forest, ocean, industrial, residential, agriculture, and so on.

A terrain storage means or library stores a plurality of generic terrain treatments that can be used generally and may be derived from photo data of forest, ocean, residential, and so on. In the system, a terrain treatment pager is controlled by the image generator to provide representations of select terrain treatments as indicated for a current theme cell based on the corner data. A theme element assembler receives the representations for the current theme cell along with the terrain treatments and provides representations of a combined theme cell that may include one or more representations of terrain treatments. Accordingly, each theme cell is textured to provide terrain display data. The system provides an effective supplement for combination with geo-specific terrain images that may be provided by current technology.

In one application, composing a dynamic image for a flight simulator, the present invention may be embodied in a system wherein only 1% of the simulated terrain is treated for high resolution (geo-specific). That is, only 1% of the terrain data is constructed of detailed images. The other 99% of the simulated terrain (bordering the important 1%) is necessary for background and for instances where a pilot accidentally veers off course. Thus, the 99% portion may comprise lower resolution images that are faster and cheaper to create.

Pursuing the above example, in accordance herewith, the 99% portion of a simulated image may be represented by generic images not accurate to the level of detail where individual buildings are depicted. For many purposes, the simulated images do not have to be photographically specific or accurately show individual objects. The images need only represent generic or typical regions of the world, for example, to the extent of representing water, vegetation patterns, agriculture, residential, and so on.

Perhaps it is noteworthy that if 100% of a flight-path terrain were to be represented with specific detail for a simulator, the data base would require somewhere on the order of 52 gigabytes of storage space. Such capacity is impractical in light of present day technology. Accordingly, the system as disclosed below affords an effective supplement for combination with geo-specific data.

In accordance with one embodiment of the present invention, an image is composed at least in part by theme cells, for example, the image texturing system produces 99% of the terrain from theme cells and 1% from photo data having a high resolution photographic quality.

In accordance with embodiments of the present invention, the image texturing system accomplishes sinuous boundaries between regions of natural terrain, such as ocean and forest (organic) and straight bound aries between man-made regions (inorganic) such as residential areas. Also, patchwork appearances are avoided by avoiding the use of repeated use of theme patterns. These, as well as other features of the invention, will become apparent from the detailed description which follows, considered together with the appended drawings.

### Brief Description of the Drawings

In the drawings, which constitute a part of this specification and in which like reference numerals indicate like parts, exemplary embodiments of the present invention exhibiting various objectives and features thereof are set forth. Specifically:
FIGURE 1 is a block diagram of an image-texturing system utilizing theme cells to generate simulated terrain image data in accordance with one embodiment of the present invention;
FIGURE 2 is a diagrammatic representation to illustrate composing a textured theme map, dissected into theme cells, which contain representations of selected terrain treatments;
FIGURE 3 is a diagrammatic representation of the theme map showing a single theme cell to illustrate representations of selected terrain treatments in accordance with a set of various combination rules;
FIGURE 4 is a block diagram of the image texturing system illustrating the combination of high resolution specific terrain data and lower resolution FIC data; and
FIGURE 5 is a diagrammatic representation of an exemplary theme map showing the manner in which boundaries within the theme cell are constructed in accordance with organic combination rules for natural terrain, such as ocean, and inorganic combination rules for man-made terrain such as residential areas.

### Detailed Description of the Preferred Embodiment

As required, a detailed illustrative embodiment of the present invention is disclosed herein. However, the computer graphics system and image generator described in connection with the present invention may be embodied in a wide variety of forms, some of which may be quite different from those of the disclosed embodiment. Consequently, the specific structural and functional details disclosed herein are merely representative; yet in that regard, they are deemed to afford the best embodiment for purposes of disclosure and to provide a basis for the claims herein which define the scope of the present invention.

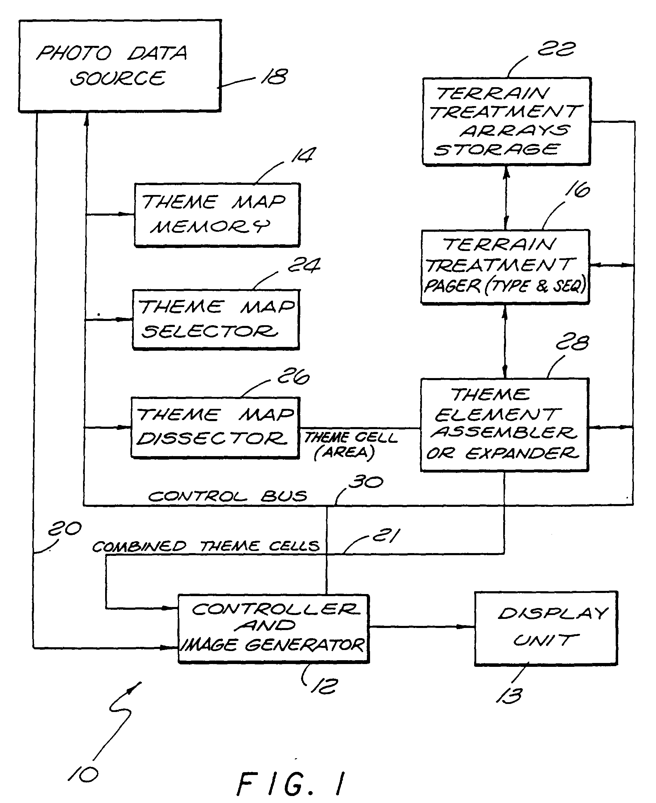

Referring initially to FIGURE 1, an image generating system 10 develops simulated images of a terrain or external scene in real time for applications such as flight simulation systems. Several forms of such systems that are well known in the prior art include similar components, specifically a controller and image generator 12 driving a display unit 13 (FIGURE 1, bottom). Forms of the controller and generator 12 and the display unit 13 are well known and may be readily adapted for use in the system of FIGURE 1.

The controller and generator 12 receives both detailed geo-specific data and general theme cell data to provide composite image data to the display unit 13. The controller and image generator 12 receives geo-specific data from a photo data source 18 (upper left) through a bus 20 for specific portions of the image display. The controller and image generator 12 receives generic data for theme cells through a bus 21 for other portions of the display. Thus, components of a dynamic display are provided either as photo data from the source 18 through the bus 20 or as theme cell data from an image texturing system (comprising the other blocks of FIGURE 1) through the bus 21. Generally, overall control and sequencing is accomplished by the controller and image generator 12 through a control bus 30 that is coupled to all other elements as indicated.

By using both photo data and theme cell data, the system 10 displays terrain image data rapidly and economically, without requiring vast amounts of memory. In accordance with prior techniques, the image data represents simulated, visual images in real time in accordance with well known raster scan formats for generating images. The images are displayed on a display device 13 (lower right) such as a CRT or the like.

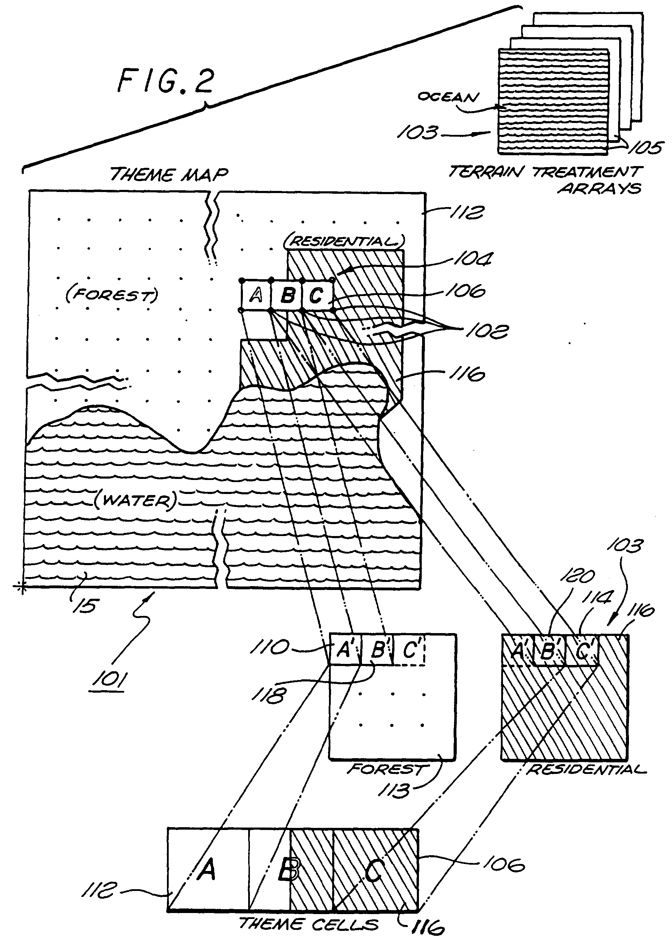

Reference now will be made to FIGURE 2 for some preliminary consideration of the techniques and operations performed in the development of theme cell data. Data for the theme cell portion of the display is detailed square-by-square by utilizing feature identification codes (FIC's) at the corners of each cell or square to specify the square contents with regard to themes, e.g. forest, water, etc. Contiguous squares of the same theme are detailed by data of adjacent treatments from an extensive array to avoid a patchwork appearance. Squares containing different themes are composed to selectively attain appropriate demarcations in accordance with rules as treated below.

To consider FIGURE 2 as related to FIGURE 1, a theme map 101 (FIGURE 2, not relatively scaled) is stored in a theme map memory 14 (FIGURE 1, center). The map 101 is configured in a grid-like pattern of squares with FIC's (feature identification codes) at locations represented by array reference dots 102 (image reference identifiers) (FIGURE 2). Four dots 102 are disposed at the four corners of each square or cell 106 in the array 104. The FIC's identify generic representations of the terrain at each corner dot 102. Thus, each square constitutes a theme cell 106 to be quartered and textured or detailed with specific terrain themes, e.g. forest, water, and so on.

In an exemplary embodiment, the dots 102 specifying FIC's are separated by forty meters, i.e. the theme cells 106 manifest low resolution data embracing squares of forty meters which enables effective storage.

In display form, each theme cell 106 is textured or represented by a number of texels (pixels) arranged in a grid pattern of 32 x 32 texels. A maximum resolution 1.25 meters per texel is accommodated in a case where the FIC's are disposed at forty-meter intervals.

The image generator and controller 12 (FIGURE 1, lower center) maintains the theme cells 106 (FIGURE 2) in the theme map 101 current and updated with terrain image data corresponding to the area over which a flight is simulated. Essentially, a frame buffer may be utilized for that function, as well known in the prior art.

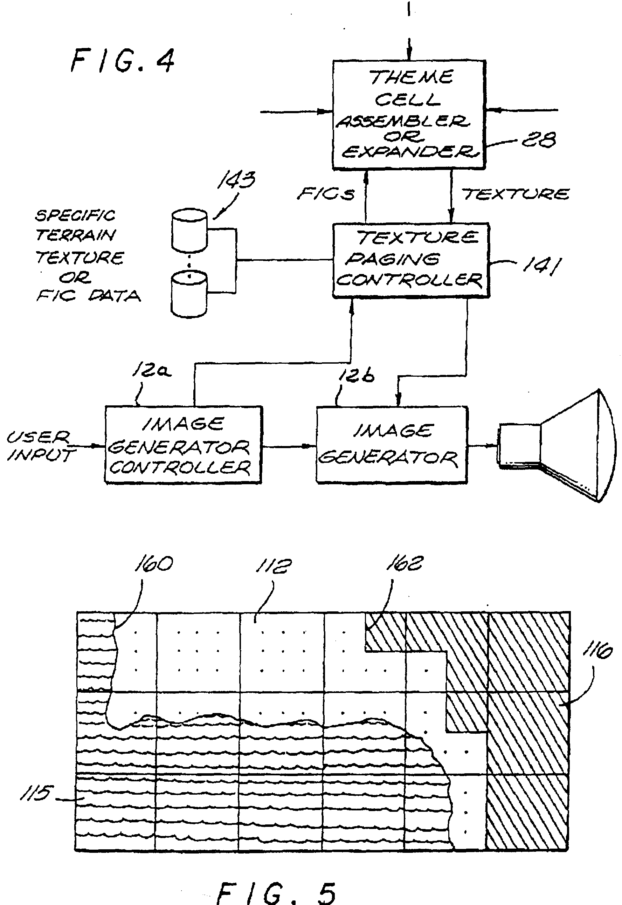

In one embodiment, the theme map 101 (FIGURE 2) comprises an array of 1,024 x 1,024 theme cells 106. The cells 106 of the array, with specified feature identification codes, are then filled by theme data using modules addressing, from treatment arrays 103. The theme map 101, stored by the theme map memory 14 (FIGURE 1) is provided and maintained in the disclosed embodiment by disk storage as disclosed in greater detail below with reference to FIGURE 4.

Next, consider a situation where the image generator 12 develops a group of texels (pixels) to represent an area equal to or smaller than forty meters (i.e. for a craft flying at a low altitude, requiring high resolution of the ground). In that situation, the controller and generator 12 first determines whether the geographic area involved is covered by available photographic data stored in the photo data source 18. Typically, if the geographic area is important to the purpose of the simulation, the photo data will be available. If so, using techniques and apparatus well known in the prior art, RGB (red, green, blue) texel data is fetched from the photo data source 18 and sent to the image generator 12 on a bus 20. Accordingly, the data is assembled in accordance with well known principles of the prior art.

If no photo data is available, then in accordance herewith, the system 10 composes theme cells from the theme map 101 and FIC data to create image texel data that is sent to the image generator 12. Thus, in accordance with one embodiment, combination photo and theme data are utilized to formulate a dynamic display image.

A terrain treatment arrays storage 22 (FIGURE 1, upper right) contains a library of theme arrays 103 (FIGURE 2, upper right). The images of various terrains are used in the construction of theme cells 106 (FIGURE 2). Each theme cell 106 (A, B, and C) is generated by use of the FIC's stored for the dots 102 which bound the theme cell 106 at each of its four corners.

A theme map selector 24 (FIGURE 1, center) selects current theme map data from the theme map memory 14. As explained in detail below, a theme map dissector 26 composes individual theme cells using the FIC data for the represented four dots 102 which bound each theme cell. As indicated, the theme data for texturing individual theme cells is stored in a terrain treatment storage 22 (FIGURE 1) as a theme library of arrays 103 (FIGURE 2, upper right) comprising theme map treatment arrays 105 as for forest, water, and so on. Select themes indicated by feature identification codes are fetched from the storage 22 by a terrain pager 16 for use in an assembler or expander 28. Essentially, the assembler or expander textures theme cells with specified treatments as will now be considered.

The four FIC's specified by the dots 104 (FIGURE 2) at the corners of each of the theme cells 106 (A, B, and C) determine which terrain treatments will appear in each theme cell 106. Each FIC indicates a type of terrain, such as forest, ocean, or residential. For example, forests may be represented by the value "0", oceans by the value "1", residential areas by the value "2", and so on. Essentially, the corner data of the dots 104 specified for each cell or block of the theme map 101 (FIGURE 2) serves to specify terrain treatments from the arrays 103 for texturing combination. For cells containing more than one treatment, e.g. forest and ocean, combinations may be based on rules as treated below.

When all four FIC's represented at the four corners of the theme cell 106 are identical, a portion of an appropriate terrain treatment array 105 from the arrays 103 simply is copied and mapped to the theme cell. For example, the four corner dots 102 of the theme cell 106A (FIGURE 2) specify terrain covered with forest. Thus, the FIC values at the corners of the theme cell are 0, 0, 0, and 0, indicating all forest. Therefore, the image data for theme cell 106A is copied from an array segment 110 of a forest terrain treatment stored in the terrain treatment arrays storage 22 (FIGURE 1). Similarly, a theme cell 106C (FIGURE 2) lies within a portion of the terrain theme map 101 entirely covered by residential area. Therefore, the image data for theme cell 106C is copied from an aligned position in the array 116, specifically array segment 114 of a residential terrain treatment.

Next, consider the center theme cell 106B, two corners of which lie in a terrain covered by forest and two corners of which lie in a terrain covered by residential areas. The theme cell 106B is generated by combining a first array segment 118 of the forest terrain treatment array 113, and a second array segment 120 from the residential terrain treatment array 116. The method for combining these two regions is explained in greater detail below.

As segments of the terrain treatment arrays are used cell-by-cell to generate the detailed contents of theme cells, subsequent segments are sequentially copied in sequential order from neighboring segments as illustrated in FIGURE 2. For example, a raster pattern sequence may be employed taking segments from an array in adjacent blocks to preserve the original order. This technique avoids a patchwork appearance characteristic of repeating a single terrain segment for neighboring theme cells 106. Also, seamless edges are provided between terrain treatment segments in neighboring theme cells 106.

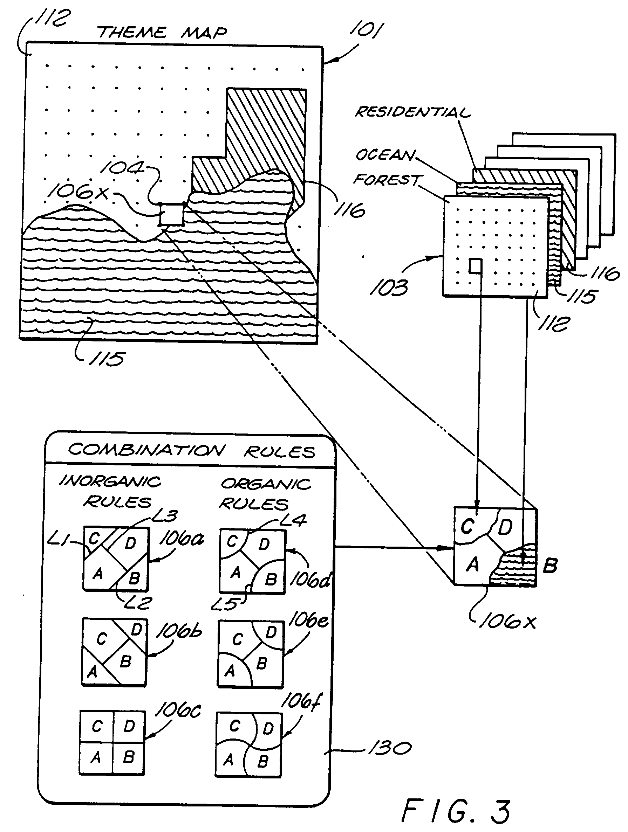

Reference will now be made to FIGURES 3 and 5 in relation to the generation of boundaries between theme cells 106 in the theme map 101. Realistic boundaries within a theme cell 106X (FIGURE 3, lower right) between different terrain image portions (A, B, C, and D) are generated by considering the content of the adjoining terrain image portions. In the case of natural areas such as forest, ocean, and grass, a sinuous merging rule (organic) preferably is applied, as illustrated by the organic boundary 160 (FIGURE 5). For unnatural areas, such as farm fields, residential areas, and industrial areas, an inorganic merging rule is necessary to prevent the sinuous merging of unnatural areas, as illustrated by the inorganic boundary 162 shown in FIGURE 5.

One critical requirement in the generation of combination rules (both organic and inorganic) is that boundaries match at the edges of cells. One way to guarantee that theme cells 106 match at the edges is to use boundaries that terminate at the edge of the theme cell on the midpoint between the corners. This allows sequence of adjacent theme cells to be textured without noticeable breaks in a seam or demarcation line.

Another key to creating effective combinations is to embody rules that avoid distinctive character patterns. An example of a distinctive character pattern might be a display with a sharp point like the tooth of a saw blade. Specifically, a straight boundary across several theme cells 106 (FIGURE 2) between residential and forest might begin to look like a saw blade with the sharp point repeating at the theme cell interval. Thus, when a rule is observed to repeat over and over, several different copies of the theme cell rule should be available for choice according to a pattern to produce the same result in the same place to avoid a repeating texture pattern.

In the exemplary embodiment, six combination rules are disclosed, three inorganic and three organic. The rules quarter cells into areas A, B, C, and D. The inorganic rules are exemplified in a rules block 130 (FIGURE 3) and are used to quarter cell blocks 106a, 106b, and 106c defining straight lines. Specifically, the cell block 106a is unequally quartered by two straight diagonal lines L1 and L2 defining corner apex areas B and C. A perpendicular straight diagonal line L3 extends between midpoints of the lines L1 and L2 to define corner areas A and D.

The cell block 106d illustrates a theme allocation similar to that of cell block 106a, however, using an organic rule. Recapitulating, inorganic rules are used when any theme is flagged as inorganic. Otherwise organic rules ar used. Accordingly, the organic rules, e.g. block 106d, involve curved border lines. Note, for example, that the lines L4 and L5 of the cell block 106d are arcuate.

The six rules illustrated in the rules block 130 are selectively employed to accommodate borders between terrain themes. If a bordering terrain theme is natural, an organic rule is applied. Conversely, unnatural terrain themes prompt selection of an inorganic rule. Application of the rules is based on the corner dot data specifying each cell. Other combination rules or classes of rules besides organic and inorganic are possible, but the rules shown are simple and effective.

FIGURE 3 illustrates rule selection and application by the theme element assembler 28 (FIGURE 1). In the exemplary embodiment, the regions labeled A, B, C, and D (FIGURE 3) illustrated in the rules block 130 are variously combined within single theme cells. For theme cell blocks 106a - 106f encompassing more than one theme, the squares illustrate the terrain treatments indicated by the feature identification data for the corresponding corners of the theme cell. The combination rules of the block 130 are executed by detailing segments of the terrain treatment arrays 103 into the indicated regions of the theme cells in accordance with the rule specified.

To consider an example, in FIGURE 3, three corners (FIC's) of the theme cell 106 (in theme map 101) are located in forest terrain 112 and one corner is located in ocean terrain 115. Because the two terrains are natural, the theme element assembler or expander 28 (FIGURE 1) selects an organic rule as illustrated by the cells 106d, 106e, and 106f, specifically the first (cell 106d) because it tends to generate a natural corner. By applying the first organic rule (106d), the theme element assembler generates the resulting theme cell by selecting adjacent segments of a forest theme from array 112 for regions A, C, and D and by selecting a segment of an ocean theme 115 for the region B.

To further increase the natural-looking characteristic, the borders created by the organic combination rules should be varied slightly in sequences of application. This tends to avoid the problem discussed above attendant repeated application of a combination rule causing a repeated identical border between two regions on the theme map 101.

Rule selection may be variously implemented in the assembler 28 (FIGURE 1) and in one embodiment may simply involve a truth table. Considering the cell 106X (FIGURE 3) the lower, right corner (B) is to represent water while the remainder of the cell (A, C, and D) is to represent forest. Considering the three organic rules, it will be apparent that only the first rule would be appropriate. Thus, the selection is apparent. In the system, a truth table can be addressed based on the four themes. In the assumed example:

| | | |
|---|---|---|
| A | 1 | forest |
| B | 2 | residential |
| C | 1 | forest |
| D | 1 | forest |

the truth table would indicate application of the first rule.

In some examples, there will not be an apparent favored rule. For such cases, the truth table will pseudo-randomly designate one of the alternatives. As explained above, with a rule selected, a current theme cell in process is blended to accomplish the representative display data. Recapitulating in that regard, if geo-specific data is available from the source 18 (FIGURE 1), it is used. Otherwise, the theme map memory is addressed by the map selector 24 and the dissector 26 to provide a set of four data units representing the themes at the corners of a theme cell.

The corner data (feature identification data or FID) for the theme cell is supplied to the assembler 28, which also receives the theme data from the array storage 22 addressed by the pager 16. With such data, the assembler composes the theme cell in accordance with the principles described above, as by selecting individual texels.

Referring now to FIGURE 4, the system will be treated from a somewhat different viewpoint. In that regard, user input, such as from the flight simulation device or the like, is provided to the image controller and generator 12 (FIGURE 4, bottom, shown as separate blocks 12a and 12b for illustration clarity). The image controller 12a determines which portions of data are required to form specific new portions of the image being generated. The controller 12a fetches information for these new portions through a texture paging controller 141. Specifically, the texture paging controller 141 determines whether specific terrain texture data is available from disk storage 143 for the new portions. If specific terrain texture (photo data) is available, that data is provided directly to the image generator. If specific terrain texture is not available, the FIC data for the new portions is fetched by the texture paging controller 141 from the expander 28 as discussed above in relation to FIGURE 1. The FIC data for each theme cell is provided to the theme cell expander 28 which used the FIC data to generate theme cells that are representative of semi-specific image quality. The theme cell texture is then provided by the theme cell expander to the texture paging controller 141 which sends the texture information directly to the image generator 12b. Using the texture data information, the image generator generates the image on the display 13.

## Claims

1. An image texturing system (10) for generating simulated terrains or external scenes as for applications such as flight training, said image texturing system (10) having an image generator (12) for generating visual real-time images for display on a display device (13) and a means for storing (14) a theme map (101) made up of a plurality of theme cells (106) disposed in a grid pattern, each theme cell having associated index identifiers (FIC's), said index identifiers indicating geographic terrain characteristic themes, said image texturing system being
**characterized by:**
means for storing terrain treatment arrays (103) of said geographic terrain characteristic themes for application to said theme cells (106); and means for applying at least part of at least one of said terrain treatment arrays (103) to said theme cells (106), whereby a single terrain treatment is applied when the index identifiers for a theme cell (106) have the same value, and a plurality of terrain treatments are applied when the index identifiers for a theme cell (106) do not have the same value, the relevant theme cell being composed by a combination of terrains as indicated by the index identifiers such that one rule type (106a-106c) is applied in the case of natural areas and another rule type (106d-106f) is applied in the case of unnatural areas, and whereby in both cases boundaries terminate at predetermined junction locations for continuity.

2. An image texturing system (10) as defined in claim 1 additionally characterized by means for generating a selected high resolution portion in said real-time visual image from photographic data stored in a photo data source (18).

3. An image texturing system (10) as defined in claim 1 wherein said terrain treatment arrays (103) are larger than intervals between said index identifiers in said grid pattern.

4. An image texturing system (10) as defined in claim 1 wherein said terrain treatment arrays (103) representing each of said geographic terrain characteristic themes have a plurality of subportions arranged in an array, each subportion selected sequentially when applied to said index identifiers.

5. An image texturing system as defined in claim 1 additionally characterized by: four index identifiers to indicate the type of terrain.

6. An image texturing system (10) as defined in claim 1 wherein said one rule type is a sinuous merging rule type.

7. An image texturing system (10) as defined in claim 1 wherein said another rule type is an inorganic merging rule type.

8. An image texturing system (10) as defined in claim 1 wherein in both cases said boundaries terminate at the edge of said relevant theme cell substantially on the midpoint between the corners.

## Patentansprüche

1. Bildstrukturiersystem (10) zum Erzeugen simulierter Gelände- oder Außenszenen für beispielsweise Anwendungen wie die Flugausbildung, wobei das Bildstrukturiersystem (10) einen Bildgenerator (12) zum Generieren von visuellen Echtzeitbildern zur Anzeige auf einer Anzeigevorrichtung (13) und eine Einrichtung zum Speichern (14) einer Themenkarte (101) aufweist, die aus einer Mehrzahl von Themenzellen (106) gebildet ist, die in einem Gittermuster angeordnet sind, wobei jeder Themenzelle Indexidentifikatoren (FICs) zugeordnet sind, die charakteristische geographische Geländethemen angeben, wobei das Bildstrukturiersystem **gekennzeichnet ist durch:**
eine Einrichtung zum Speichern von Geländebehandlungsfeldern (103) der charakteristischen geographischen Geländethemen zum Anwenden auf die Themenzellen (106); und eine Einrichtung zum Anwenden mindestens eines Teils mindestens eines der Geländebehandlungsfelder (103) auf die Themenzellen (106), wodurch eine einzelne Geländebehandlung Anwendung findet, wenn die Indexidentifikatoren für eine Themenzelle (106) den gleichen Wert haben, während eine Mehrzahl von Geländebehandlungen Anwendung findet, wenn die Indexidentifikatoren für eine Themenzelle (106) nicht den gleichen Wert haben, wobei die relevante Themenzelle sich zusammensetzt aus einer Kombination von Geländen, wie sie von den Indexidentifikationen angegeben werden, so daß ein Regeltyp (106a - 106c) Anwendung findet im Fall natürlicher Gebiete, und ein anderer Regeltyp (106d - 106f) Anwendung im Fall unnatürlicher Gebiete findet, und wobei in beiden Fällen zwecks Kontinuität Grenzen an vorbestimmten Verbindungsstellen enden.

2. Bildstrukturiersystem (10) nach Anspruch 1, zusätzlich **gekennzeichnet durch** eine Einrichtung zum Generieren eines ausgewählten Hochauflösungsabschnitts in dem visuellen Echtzeitbild aus fotografischen Daten, die in einer Fotodatenquelle (18) gespeichert sind.

3. Bildstrukturiersystem (10) nach Anspruch 1, bei dem die Geländebehandlungsfelder (103) größer sind als die Intervalle zwischen den Indexidentifikatoren in dem Gittermuster.

4. Bildstrukturiersystem (10) nach Anspruch 1, bei dem die Geländebehandlungsfelder (103), die jedes von den charakteristischen geographischen Geländethemen darstellen, eine Mehrzahl von Unterabschnitten besitzen, die in einem Feld angeordnet sind, wobei jeder Unterabschnitt sequentiell ausgewählt wird, wenn er auf die Indexidentifikatoren angewendet wird.

5. Bildstrukturiersystem nach Anspruch 1, zusätzlich **gekennzeichnet durch** vier Indexidentifikatoren zum Angeben des Geländetyps.

6. Bildstrukturiersystem (10) nach Anspruch 1, bei dem der eine Regeltyp ein Regeltyp für einen geschlängelten Übergang ist.

7. Bildstrukturiersystem (10) nach Anspruch 1, bei dem der andere Regeltyp ein Regeltyp für einen unnatürlichen Übergang ist.

8. Bildstrukturiersystem (10) nach Anspruch 1, bei dem in beiden Fällen die Grenzen an dem Rand der relevanten Themenzelle etwa am Mittelpunkt zwischen den Ecken enden.

## Revendications

1. Un système de texturation d'images (10) pour générer des terrains simulés ou des scènes extérieures pour des applications telles que l'entraînement des pilotes, ledit système de texturation d'images (10) présentant un générateur d'image (12) pour la génération en temps réel d'images visuelles à afficher sur un dispositif d'affichage (13) et des moyens (14) pour mettre en mémoire une carte thématique (101) constitué d'une pluralité de cellules thématiques (106) disposées selon un réseau en forme de grille, chaque cellule thématique présentant des identificateurs d'index associés (FIC), lesdits identificateurs d'indice indiquant des thèmes caractéristiques d'un terrain géographique, ledit système de texturation d'images étant caractérisé par:
- des moyens pour mettre en memoire des tableaux de traitement de terrain (103) desdits thèmes caractéristiques d'un terrain géographique pour application auxdites cellules thématiques (106); et
- des moyens pour appliquer au moins une partie d'au moins l'un desdits tableaux de traitement de terrain (103) auxdites cellules thématiques (106), de manière qu'un traitement de terrain unique soit appliqué quand les identificateurs d'index pour une cellule thématique (106) présentent la même valeur, et qu'une pluralité de traitements de terrain soit appliquée quand les identificateurs d'indice pour une cellule thématique (106) ne présentent pas la même valeur, la cellule thématique concernée étant composée d'une combinaison de terrains, tel qu'indiqué par les identificateurs d'indice, de sorte que, dans le cas de zones naturelles, on applique un type de règle (106a - 106c) et, dans le cas de zones non naturelles, on applique un autre type de règle (106d - 106f) et de manière que, dans les deux cas, les frontières se terminent à des emplacements de jonction prédéterminés pour assurer la continuité.

2. Un système de texturation d'images (10) selon la revendication 1, caractérisé par des moyens de génération d'une partie choisie à résolution élevée, de ladite image visuelle en temps réel, à partir de données photographiques mises en mémoire dans une source de données photographiques (18).

3. Un système de texturation d'images (10) selon la revendication 1, dans lequel lesdits tableaux de traitement de terrain (103) sont plus larges que les intervalles entre lesdits identificateurs d'index dans ledit réseau de grille.

4. Un système de texturation d'images (10) selon la revendication 1, dans lequel lesdits tableaux de traitement de terrain (103) représentant chacun desdits thèmes caractéristiques d'un terrain géographique, présentent une pluralité de subdivisions disposées selon une matrice, chaque subdivision étant sélectionnée séquentiellement lors de son application auxdits identificateurs d'indice.

5. Un système de texturation d'images (10) selon la revendication 1, caractérisé en outre par quatre identificateurs d'indice pour indiquer le type de terrain.

6. Un système de texturation d'images (10) selon la revendication 1, dans lequel ledit type de règle est un type de règle de mélange sinueux.

7. Un système de texturation d'images (10) selon la revendication 1, dans lequel ledit autre type de règle est un type de règle de mélange inorganique.

8. Un système de texturation d'images (10) selon la revendication 1, dans lequel, dans les deux cas, lesdites frontières se terminent au bord de ladite cellule thématique concernée, sensiblement en un point à mi-chemin entre les angles.
